# EUROPEAN PATENT APPLICATION

(11) **EP 1 492 329 A2**
(43) Date of publication of application: **29.12.2004**
(21) Application number: 04006565.8
(22) Date of filing: 18.03.2004
(51) Int. Cl.: H04N 1/44

(54) **Data encrypting device, data decoding device, image data storing device and image forming apparatus**

(30) Priority: 26.06.2003 JP 2003182222
(71) Applicant: KONICA MINOLTA BUSINESS TECHNOLOGIES, INC., Tokyo 100-0005 (JP)
(72) Inventor: Oda, Akihiko, Hachioji-shi Tokyo (JP)
(74) Representative: Henkel, Feiler & Hänzel

(57) **Abstract**

In order to encrypt and decode image data at high speed without providing additional special hardware and placing a heavy load on a CPU, image data 10 is compressed by a compression scheme, and a portion of the compressed data 11 is extracted as encryption key data 12 and the portion, from which the encryption key data 12 is extracted, of the compressed data 11 is changed to zero to convert the compressed data 11 to encrypted data 13. The encrypted data 13 cannot be decoded because data in the beginning portion is corrupted. Moreover, since the decoding of the encrypted data is made impossible by utilizing the property of compressed data, the image data can be encrypted and decoded by a simple processing.

## Description

### BACKGROUND OF THE INVENTION

### Field of the Invention:

The present invention relates to a data encrypting device for encrypting data, a data decoding device for decoding the encrypted data, an image data storing device having a function of compressing and storing image data, and an image forming apparatus using this device.

### Description of the Prior Art:

In recent years, a copier having a copying function and an image forming apparatus such as digital multifunction machine having a copying function, a scanner function, a printer function, and a facsimile function have a function of storing, as electronic data (image data), a read original image in a storage medium such as a memory and a hard disc drive (HDD). By the use of this function, the image data stored in the storage medium can be sent to an external device over a communications line and printed later on the basis of the instruction of a user.

However, on the other hand, the image data is stored as electronic data in the main body of an image forming apparatus, so there could occur such a security threat as a stored secret document being printed and taken away by a third party without permission and secret data being sent to outside by electronic mail or being pulled out via a network. For this reason, the image forming apparatus needs to have a security function and, for example, a technology of requiring authentication by a password at the time of taking out a document stored in the main body and a technology of encrypting and storing document data and image data have become widespread (see, for example, Japanese Patent No. 3375631).

The technology of encrypting and storing document data and image data is highly effective in the improvement of security and various encryption schemes have been put into practical use. However, image data used in the copier and the digital multifunction machine have a very large amount of information and hence it takes much time to encrypt or decode the image data. For this reason, if a method of improving the level of security by encrypting the image data is employed, such a problem will occur that a process of encrypting and encoding the image data occupies the CPU for an increased time and hence reduces productivity as the image forming apparatus itself.

Hence, a method of mounting the CPU with a chip designed exclusively for encrypting and decoding the image data to reduce the load of the CPU has been employed. However, this method presents a problem that hardware needs to be modified so as to add a security function to an existing kind of apparatus by the use of this method, which in turn results in increasing the price of the apparatus.

### SUMMARY OF THE INVENTION

The present invention has been made in view of the above problems presented by the technologies in the prior art. The object of the present invention is to provide a data encrypting device, a data decoding device, an image data storing device, and an image forming apparatus that can encrypt and decode data such as the image data at high speeds without providing additional specific hardware or placing a heavy load on a CPU.

In order to achieve such an object, a first aspect of the present invention is to provides a data encrypting device comprising: encryption key extracting means (201) that extracts a portion of compressed data, acquired by compressing data by a compression processing, as encryption key data; and encryption means (202) that changes the portion, extracted as the encryption key data, of the compressed data to encrypt the compressed data.

According to the above-described invention, by extracting the encryption key data by the use of the compressed data and changing the compressed data to encrypt it, the data can be easily encrypted.

Further, it is recommended that a compression processing, by which if even a portion of compressed data is not correct, the compressed data cannot be expanded, be employed as a compression scheme and that a portion of compressed data acquired by compressing data by the compression scheme be extracted to be the encryption key data. The portion, extracted as the encryption key data, of the compressed data is corrupted to encrypt the compressed data.

The compression scheme by which if even a portion of compressed data is not correct, the compressed data cannot be expanded includes, for example, an LZ compression scheme. In particular, a compression scheme of decoding data to come with reference to the data in the past (dictionary) is suitable for the encrypting of the data according to the present invention.

The encrypting of the compressed data can be performed by replacing a portion, from which the encryption key data is extracted, of the compressed data with a value different from the encryption key data, and in order to more surely prevent the encrypted compressed data from being decoded, the clearing of the portion to zero is recommended. In other words, it is desirable that the portion be replaced with data which does not correlate with and is sufficiently different from the encryption key data. Moreover, as the amount of data extracted as the encryption key data is larger, the level of security becomes higher. It is more desirable that the encryption key data is extracted from a plurality of portions of the compressed data or that the portions to be extracted in itself are encrypted.

Further, the compressed data is encrypted by deleting the portion, extracted as the encryption key data, of the compressed data. For example, by dividing the compressed data into a portion of encryption key data (151) and a portion other than this (152), the encryption key data can be extracted and the portion from which the encryption key data is extracted can be deleted.

Still further, the compressed data can be encrypted by adding other data to the portion, extracted as the encryption key data, of the compressed data. For example, by adding data to the portion, corresponding to the encryption key data, of the compressed data, the encryption key data can be extracted and the portion from which the encryption key data is extracted can be changed.

The compressed data can be encrypted in this manner by a simple processing, so it is possible to encrypt the data and to improve the level of security without providing additional special hardware or placing a heavy load on the CPU. In particular, at the time of storing a large amount of data, the data is subjected to a compression processing so as to reduce the amount of memory to be used. In this case, according to the present invention, the data is encrypted by utilizing the property of the compressed data after compression and hence the compressing and encrypting of the data can be effectively realized.

Still further, it is desirable that a predetermined range from the beginning of the compressed data is made the encryption key data.

In the compression processing, in particular, in the compression scheme by which if even a portion of compressed data is not correct, the compressed data cannot be expanded, in many cases, the beginning portion of the compressed data plays an important role in expanding the compressed data. Hence, by corrupting or deleting this beginning portion, it is possible to prevent the compressed data from being expanded from the very beginning and hence to improve the level of security.

A second aspect of the present invention is to provide a data decoding device comprising: encryption key extracting means (201) that extracts a portion of compressed data, acquired by compressing data by a compression processing, as the encryption key data; encryption means (202) that changes the portion, extracted as the encryption key data, of the compressed data to encrypt the compressed data; and compressed data decoding means (221) that combines the encryption key data and the compressed data after encryption, both of which are generated from the same compressed data, to decode the above combined data to the compressed data before encryption.

According to the above-described invention, of the encrypted compressed data, the potion which is corrupted (replaced), deleted, or has data added thereto is decoded by the encryption key data and can be expanded. The encrypted compressed data can be decoded to the compressed data capable of being expanded by a simple processing like this. Hence, the encrypted compressed data can be decoded at high speeds without providing additional special hardware or placing a heavy load on the CPU.

A third aspect of the present invention is to provide an image data storing device comprising: compression means (28) that compresses image data by a compression processing; encryption key extracting means (31) that extracts a portion of compressed data acquired by compressing the image data by the compression means (28), as encryption key data; encryption means (32) that changes the portion, extracted as the encryption key data, of the compressed data to encrypt the compressed data; encryption key storing means (51) that stores the encryption key data extracted by the encryption key extracting means (31) ; encrypted data storing means (40) that stores encrypted data acquired by encrypting the compressed data by the encryption means (32); management information storing means (52) that stores management information showing the correspondence between the encryption key data and the encrypted data both of which are acquired from the same compressed data; compressed data decoding means (33) that extracts the encryption key data and the encrypted data, both of which are acquired from the same compressed data, from the encryption key storing means (51) and the encrypted data storing means (40) on the basis of the management information stored in the management information storing means (52) and combines them to decode them to the original compressed data; and expansion means (29) that expands the compressed data decoded by the compressed data decoding means (33) to the image data before compression.

According to this invention, the encryption key data extracted from the compressed data is stored in the encryption key storing means (51), and the encryption data acquired by changing the portion of the encryption key data of the compressed data is stored in the encrypted data storing means (40), and the management information showing the correspondence between the encryption key data and the encrypted data, both of which are acquired from the same compressed data, is stored in the management information storing means (52). With this, the image data is encrypted and stored. Moreover, at the time of expanding the image data, the encryption key data and the encrypted data are extracted from the encryption key storing means (51) and the encrypted data storing means (40), respectively, on the basis of the management information and are combined with each other to be decoded to the compressed data and then the compressed data is expanded. Therefore, the user can store and takes out the image data without being aware that the image data is encrypted in the device.

Moreover, in the case of storing the image data, the image data is subjected to a compression processing so as to reduce the amount of memory to be used, and the image data is encrypted by utilizing the property of the compressed data generated by this compression processing, so the compressing and encrypting of the image data can be effectively realized.

Moreover, a method of changing a portion corresponding to the encryption key data of the compressed data includes the corrupting (replacing) of the portion, the deleting of the portion, or the adding of other data to the portion.

A fourth aspect of the present invention is to provide an image data storing device comprising: compression means (28) that compresses image data by a compression processing; encryption key extracting means (31) that extracts a portion of compressed data, acquired by compressing the image data by the compression means (28), as encryption key data; encryption means (32) that changes the portion, extracted as the encryption key data, of the compressed data to encrypt the compressed data; encrypted data storing means (40) that stores encrypted data acquired by encrypting the compressed data by the encryption means (32); and decoding information outputting means (34) that outputs the encryption key data extracted by the encryption key extracting means (31) and specific information for specifying the encrypted data corresponding to this encryption key data in association with each other in a predetermined form to an external user.

According to this invention, the encrypted data acquired by encrypting the compressed data by the encryption means (32) is stored in the encrypted data storing means (40) in the device. On the other hand, the encryption key data and the specific information for specifying the encrypted data corresponding to the encryption key data are output in association with each other in the predetermined form to the external user. With this, only the user having the encryption key data and the specific information can decode the encrypted data stored in the image data storing device and expand the decoded compressed data. The encryption key data and the specific information are output to the user by print on the recording paper or through transmission by electronic mail or the like. In particular, if the encryption key data and the specific information are deleted from the image data storing device after they are output to the user, the encrypted data cannot be decoded only by information remaining in the image data storing device, which further improves the level of security.

Moreover, it is desirable that the image data storing device further includes: decoding information inputting means (35) that inputs the encryption key data and specific information associated with the same; compressed data decoding means (33) that extracts the encrypted data corresponding to the specific information input through the decoding information inputtingmeans (35) from the encrypted data storingmeans (40) and combines the encrypted data with the input encryption key data to decode the combined encrypted data to the compressed data before encryption; and expansion means (29) that expands the compressed data decoded by the compressed data decoding means (33) to the image data before compression.

According to the above-described invention, by inputting the encryption key data and the specific information, it is possible to decode the stored encrypted data to the original compressed data and to expand the original compressed data by the image data storing device itself.

Further, a method of changing a portion corresponding to the encryption key data of the compressed data includes the corrupting (replacing) of the portion, the deleting of the portion, and the adding of other data to the portion.

Still further, it is desirable that a predetermined range from the beginning of the compressed data is made the encryption key data.

According to the above-described invention, in the compression scheme by which if even a portion of compressed data is not correct, the compressed data cannot be expanded, in many cases, a portion in the beginning of the compressed data plays an important role in expanding the compressed data. Hence, by corrupting or deleting the portion in the beginning of the compressed data, it is possible to prevent the compressed data from being expanded from the very beginning and hence to improve the level of security.

A fifth aspect of the present invention is to provide an image forming apparatus comprising: the image storing device in accordance with the above-described third aspect; reading means (23) that reads an original document to capture image data corresponding thereto; the image data storing device, as claimed in any one of claims 5 to 10, that compresses, encrypts, and stores the image data captured by the reading means (23); and printing means (24) that forms and outputs an image corresponding to the image data on recording paper.

According to the above-described invention, it is possible to protect the image data stored in the image forming apparatus from being taken out or viewed by an illegal third party.

### BRIEF DESCRIPTION OF THE DRAWINGS

Fig. 1 is an illustration to show a principle and flow of data in encrypting and decoding the data in the present invention;
Fig. 2 is a block diagram to show the construction of an image forming apparatus in accordance with a first embodiment of the present invention;
Fig. 3 is an illustration to show a flow of processing when the image forming apparatus in accordance with the first embodiment of the present invention compresses, encrypts, and stores image data;
Fig. 4 is an illustration to show a flow in a case where the image forming apparatus in accordance with the first embodiment of the present invention compresses, encrypts, and stores the image data and transmits decoding information to the outside through a network;
Fig. 5 is an illustration to show a flow in a case where the image forming apparatus in accordance with the first embodiment of the present invention compresses, encrypts, and stores the image data and outputs decoding information in the manner of printing to the outside;
Fig. 6 is an illustration to show a flow of data in a case where the image forming apparatus in accordance with the first embodiment of the present invention decodes encrypted data stored in an auxiliary storage unit by the use of information registered in a management table and expands the decoded data to an original image data and outputs the original image data;
Fig. 7 is an illustration to show a flow of data in a case where the image forming apparatus in accordance with the first embodiment of the present invention extracts the encrypted data stored in the auxiliary storage unit to the outside through a network and the encrypted data is decoded and expanded by a user's personal computer;
Fig. 8 is an illustration to show a flow of data in a case where the image forming apparatus in accordance with the first embodiment of the present invention decodes and expands the encrypted data stored in the auxiliary storage unit by the use of decoding information output in the manner of printing;
Fig. 9 is an illustration to show a principle and a flow of data in encrypting and decoding data in a second embodiment of the present invention; and
Fig. 10 is a block diagram to show a data encrypting device and a data decoding device in accordance with a third embodiment of the present invention.

### DETAILED DESCRIPTION OF THE PREFERRED EMBODIMENTS

The present invention will now be described with reference to the drawings.

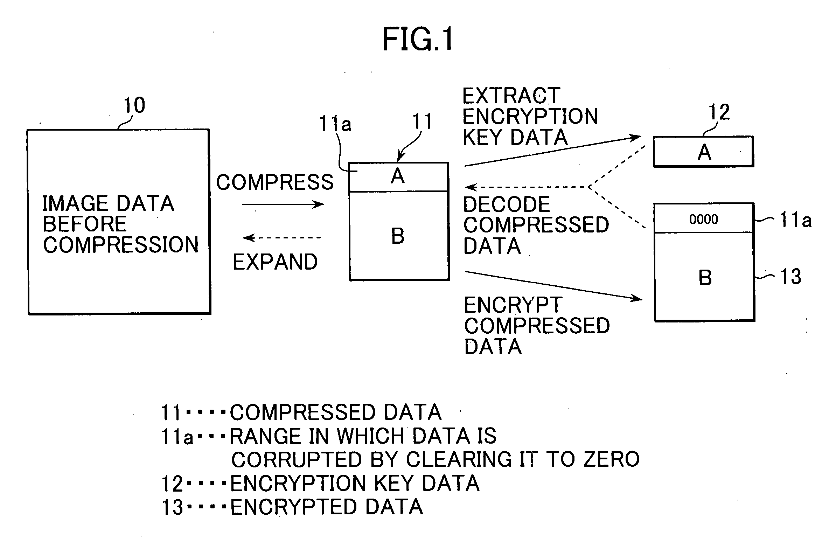

Fig. 1 shows a principle of the present invention. In the drawing, solid lines with arrows designate a flow of data at the time of compressing and encrypting the data and broken lines with arrows designate the flow of data at the time of encoding and expanding the data. In this invention, an image data 10 is compressed and a portion of compressed data 11 after compression is extracted to make an encryption key data 12. In the example in Fig. 1, a portion 11a in a predetermined range of the beginning portion of the compressed data 11 is extracted as the encryption key data 12. On the other hand, in the compressed data 11, the portion 11a from which the encryption key data 12 is extracted is changed. In this example, the portion 11a is replaced with data different from an original value by clearing it to zero or the like, whereby the compressed data 11 is encrypted and converted to an encrypted data 13. A method of changing the portion 11a can be realized by deleting the portion 11a or by replacing the portion 11a by adding data to the portion 11a in addition to clearing the portion 11a to zero. In this manner, the compressed data 11 is divided into the encryption key data portion 12 and the remaining data portion 13 or (13 + 11a) to effectively encrypt the image data.

The decoding of the encrypted data 13 to the compressed data 11 is performed by returning the encrypted key data 12 to the portion 11a corrupted by clearing it to zero or the like of the encrypted data 13. By expanding the decoded compressed data, the image data 10 before compression is regenerated.

The compressing of the image data 10 is performed by a compression scheme by which if even a portion of the compressed data is not correct, the compressed data cannot be expanded. For example, an LZ compression scheme is employed. In the LZ compression scheme, in a case where data to be compressed did not occur in the past, the data is registered as a dictionary and in a case where the data to be compressed already occurred, the position and length of the dictionary in which the same data is registered are stored to compress the data. In such a compression scheme, the expanding of the compressed data requires comparing the compressed data with the data in the past, so in a case where the data in the past or the dictionary are corrupted, the compressed data cannot be expanded to the original data.

The compression scheme is not limited to the above-described LZ compression scheme, but may be other compression scheme requiring referring to data in the past in the expansion processing or any compression scheme by which if even a part of compressed data is not correct, the compressed data cannot be expanded.

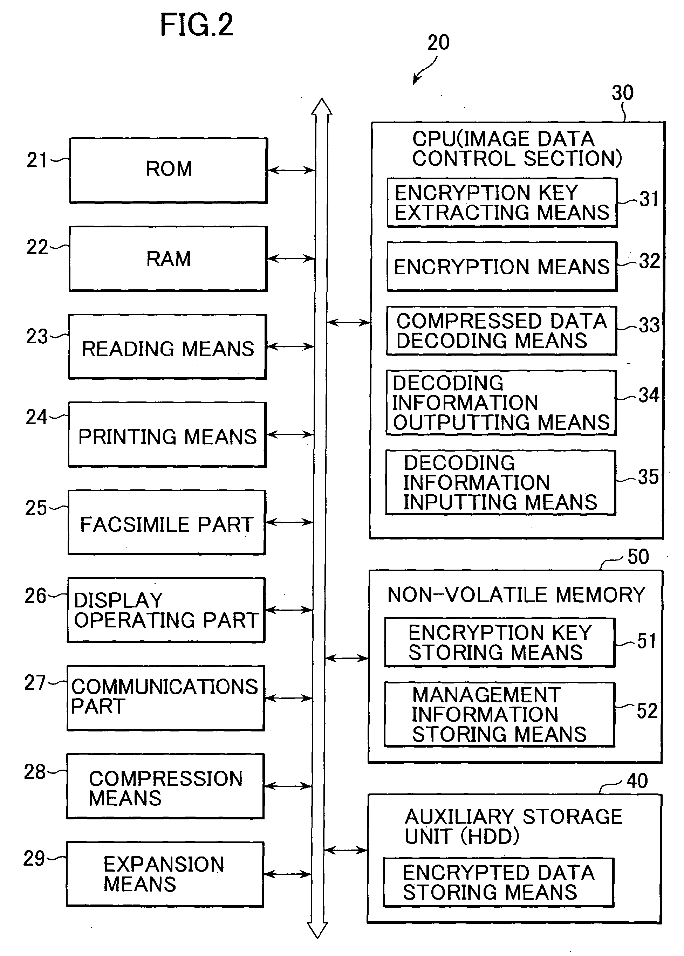

Fig. 2 shows a construction of an image forming apparatus 20 including an image data storing device in accordance with a first embodiment of the present invention. The image forming apparatus 20 is constructed as a digital multifunction apparatus provided with not only a copy function of reading an original document and forming and outputting an image corresponding thereto on recording paper, but also a scanner function, a printer function and a facsimile function. Moreover, the image forming apparatus 20 is provided with a function of compressing, encrypting or not encrypting but storing the image data acquired by reading the original document in its own apparatus, a function of transmitting the compressed and encrypted image data to an external device by the use of electronic mail or FTP (file transfer protocol), and a function of calling up and printing the stored image.

In order to realize these functions, as shown in Fig. 2, the image forming apparatus 20 is constructed of a circuit including, as main parts, a CPU (central processing unit) 30 functioning as an image data control part, a ROM (read only memory) 21 and a RAM (random access memory) 22. The CPU 30 exercises control over the operation of the image forming apparatus 20. The ROM 21 stores programs executed by the CPU 30 and various kinds of fixed data. The RAM 22 functions as a work memory for temporarily storing various kinds of data at the time when the CPU 30 executes the programs or as a page memory for storing at least one page amount of the image data so as to perform a rotation processing.

Reading means 23 exercises a function of reading the original image and capturing image data corresponding thereto. The reading means 23 has a light source for irradiating the original document with light, a line image sensor for reading the original document by one line in the direction of its width, moving means for moving a reading point for each line in the direction of length of the original document, and an optical path including a lens and a mirror that guide light reflected by the original document to the line image sensor and form an image. The line image sensor is constructed of CCD (Charge Coupled Device). An analog image signal output by the line image sensor is A/D converted, and further, is binarized by an error diffusion processing or the like, and is output as digital image data expressing each pixel by one bit of depth.

Printing means 24 exercises a function of forming and outputting an image corresponding to the image data by an electrophotographic process on the recording paper. The printing means 24 is constructed as a so-called laser printer including a transfer unit of recording paper, a photosensitive drum, a charging unit, a laser unit, a developing unit, a transferring and separating unit, a cleaning unit and a fixing unit. The facsimile part 25 is a part exercising a function as a facsimile and exercises a function of compressing and expanding the image data by a compression scheme corresponding to the facsimile and a function of controlling various kinds of communication procedures for sending or receiving the facsimile.

Display operating part 26 is constructed of a liquid crystal display having a touch panel on its surface and various kinds of operating switches and has functions of offering various kinds of guide displays and status displays to the user and receiving various operations from the user. Communications part 27 exercises a function of making connection to a telephone line and various networks to conduct communications.

Compression means 28 exercises a function of compressing the image data and expansion means 29 exercises a function of expanding the compressed data to the original image data. Compression, as described above, is conducted by the use of the compression scheme by which if even a portion of the compressed data is not correct, the compressed data cannot be expanded.

The CPU 30 as the image data control part exercises functions as encryption key extracting means 31, encryption means 32, compressed data decoding means 33, decoding information outputting means 34, and decoding information inputting means 35. The encryption key extracting means 31 extracts a portion of compressed data acquired by compressing the image data by the compression means 28 as encryption key data. The encryption means 32 exercises a function that replaces a portion of the compressed data, extracted as the encryption key data, with data different from this encryption key data to corrupt the portion, thereby converting the compressed data into the encrypted data. The compressed data decoding means 33 exercises a function that combines the encryption key data with the encrypted data to decode the encrypted data to the original compressed data.

The decoding information outputting means 34 exercises a function that outputs decoding information of linking the encryption key data extracted by the encryption key extracting means 31 to specific information for specifying encrypted data corresponding to this encryption key data in a predetermined form to an external user. Here, the decoding information outputting means 34 sends decoding information to a designated address by electronic mail or outputs the decoding information in the form of printing it on the recording paper. The decoding information outputting means 34 exercises a function of controlling these operations. The decoding information inputting means 35 exercises a function of inputting the decoding information including the encryption key data and the specific information linked to the encryption key data from the outside. The inputting of the decoding information is performed through a display operating part 26 and a communications part 27.

An auxiliary storage unit 40 is a large-capacity storage unit. Here, a hard disc drive is employed. The auxiliary storage unit 40 exercises a function as encrypted data storing means for storing the encrypted data acquired by encrypting the compressed data by means of the encryption means 32.

A non-volatile memory 50 is a memory in which information is stored even after power supply is turned off and exercises a function as encryption key storing means 51 for storing the encryption key data and management information storing means 52. The management information storing means 52 stores management information for showing the correspondence between the encryption key data and the encrypted data, both of which are acquired from the same compressed data. The encrypted data is stored as a file in the auxiliary storage unit 40 and a file name is used as the management information showing the correspondence to the encrypted data. To be more specific, a pair of the encryption key data and the name of a file for storing the encrypted data corresponding to the encryption key data are stored in a management table, whereby the encryption key data is made to correspond to the encrypted data. Here, the name of the file for storing the encrypted data is used also as the specific information described above.

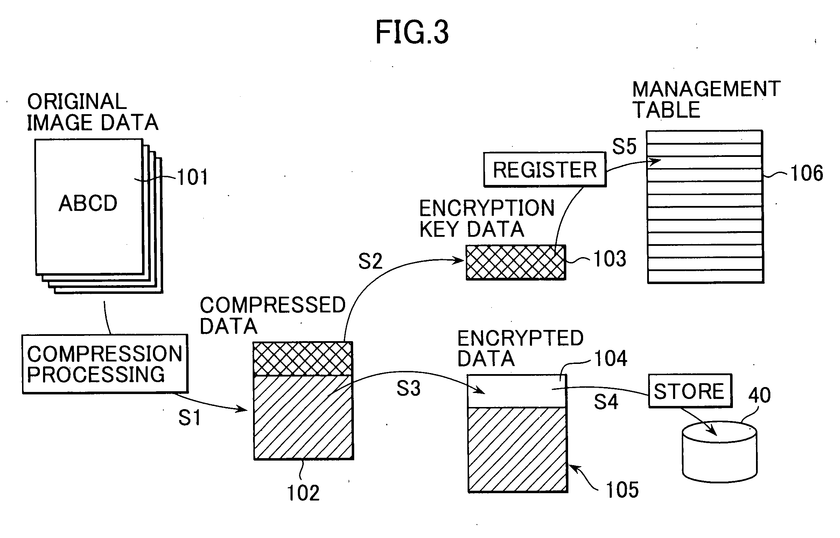

Fig. 3 shows flow of processing when the image forming apparatus 20 compresses, encrypts and stores the image data. First, the image data 101 acquired by reading the original document is compressed by compression means 28 to generate compressed data 102 (S1). At this time, the original document may be compressed for each page to generate compressed data for each page, or image data of a plurality of pages is compressed in a set to generate one compressed data as a whole.

A portion of the compressed data 102 is extracted as encryption key data 103 (S2) and data in a portion 104 from which encryption key data is extracted of the compressed data 102 from which the portion of data is extracted is cleared to zero, whereby the compressed data 102 is converted to encrypted data 105 (S3). Then, the encrypted data 105 is stored as a file in the auxiliary storage unit 40 (S4) and the name of file is registered as management information in a management table 106 in association with the encryption key table 103 (S5). The encryption key data and the storage position of the encrypted data corresponding to the encryption key data are managed and stored in a one-to-one correspondence with each other by the information registered in the management table 106.

In the encrypted data 105, the data in the portion 104 from which the encryption key data is extracted is cleared to zero, thereby being corrupted, so the encrypted data 105 cannot be expanded to the original image data. Hence, even if the encrypted data 105 stored in the auxiliary storage unit 40 is illegally extracted and delivered to a third party, the encrypted data 105 cannot be decoded and expanded to the original image data only by the data, which can provide a high level of security. Moreover, since ordinary users do not know the management method and storage position of the encryption key data 103 in the image forming apparatus 20, it is difficult for them to acquire the encryption key data 103 even by the use of illegal means, which can provide a high level of secrecy.

As the amount of data to be extracted as the encryption key data 103 is larger, the level of security becomes higher. Moreover, since the beginning portion of the compressed data 102 is extracted as the encryption key data 103 and the date in this portion is cleared to zero to be corrupted, a processing of expanding the data can never be performed, whereby the leakage of the image data can be strongly prevented.

In a case where the image data is stored, in order to reduce the amount of memory to be used, a compression processing is usually performed. In this invention, the property of the compressed data generated by this compression processing is utilized to encrypt the image data, so additional processing associated with the encryption can be reduced, whereby compression and encryption can be effectively performed.

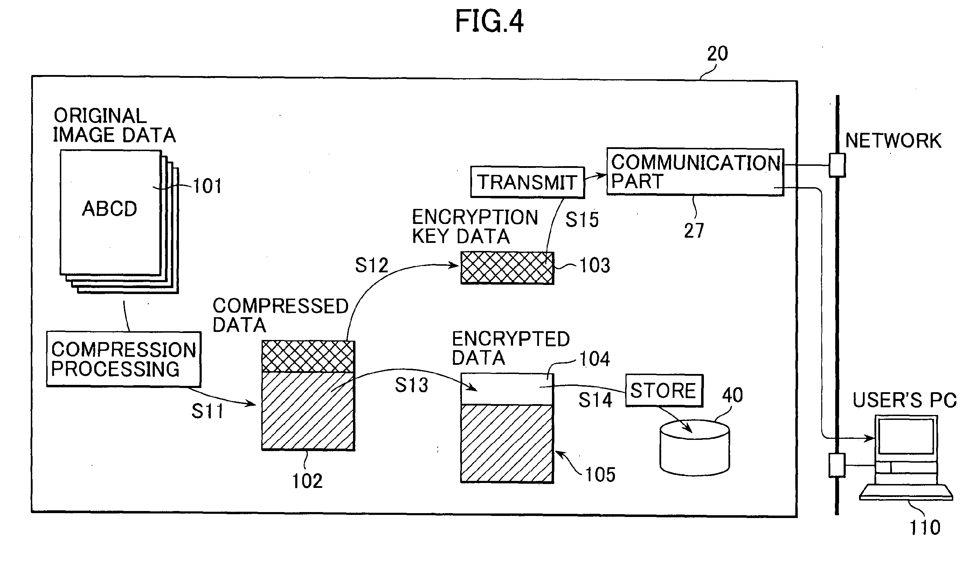

Fig. 4 shows a flow of processing in a case where the image data is compressed, encrypted and stored and the decoding information is transmitted to the outside through a network. The image data 101 acquired by reading the original document is compressed to generate the compressed data 102 (S11) and a portion of the compressed data 102 is extracted as the encryption key data 103 (S12). Moreover, the data of the portion 104 from which the encryption key data 103 is extracted is cleared to zero to convert the compressed data 102 to the encrypted data 105 (S13) and this encrypted data 105 is stored as a file in the auxiliary storage unit 40 (S14). The name of file is made specific information for specify the portion 104 from which the stored encryption key data is extracted and decoding information for linking the specific information to the encryption key data 103 is transmitted to an external designated user (S15). Here, the decoding information is transmitted to a user's personal computer 110 through a network by the use of the communication part 27 by electronic mail or FTP.

Although the encrypted data 105 is stored in the auxiliary storage unit 40 of the image forming apparatus 20, even if a third party illegally acquires only this encrypted data 105, the third party cannot expand the encrypted data 105 to the original image data, so security of the stored image data can be assured. Even in a case where the data is transmitted to the outside, as the amount of data to be extracted as the encryption key data 103 is larger, the level of security becomes higher.

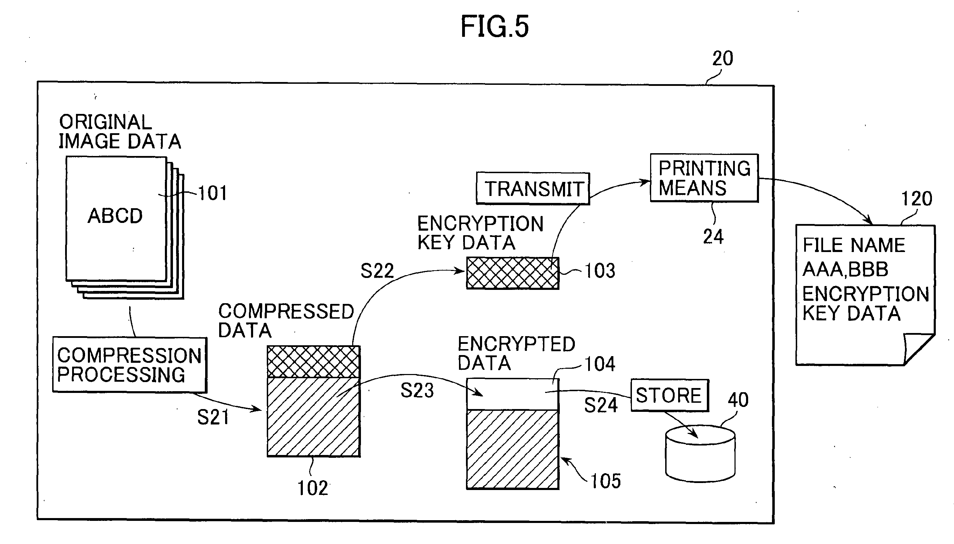

Fig. 5 shows a flow of processing in a case where the image data is compressed, encrypted, and stored and where its decoding information is output to the outside in the form of printing. The image data 101 acquired by reading the original document is compressed to generate the compressed data 102 (S21) and a portion of the compressed data 102 is extracted as the encryption key data 103 (S22). Moreover, the data of the portion 104 from which the encryption key data 103 is extracted is cleared to zero to convert the compressed data 102 to encrypted data 105 (S23) and this encrypted data 105 is stored as a file in the auxiliary storage unit 40 (S24). Decoding information for linking the name of file to the encryption key data 103 is output by printing on recording paper 120 by printing means 24. On the recording paper 120 having the decoding information printed thereon are printed the name of file and the encrypted data. The encrypted data is printed in such a manner as damp list of data. That is, the encrypted data is printed by the use of any characters of 0 to 9 and A to F every four bits.

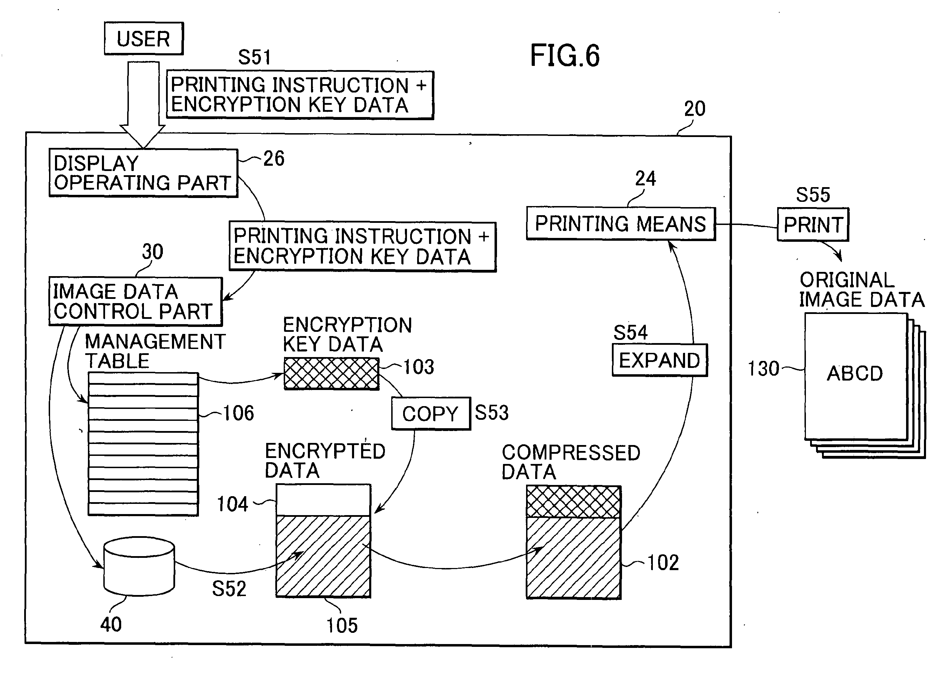

Fig. 6 shows a flow of data when the encrypted data stored in the auxiliary storage unit 40 is decoded and expanded by the use of information registered in the management table 106 to output the original image data. The user inputs a printing instruction of designating a stored file from the display operating part 26 (S31). The compressed data decoding means 33 of the CPU 30 receiving the printing instruction reads the designated file from the auxiliary storage unit 40 and sets the encrypted data 105 registered in the designated file in a predetermined region of RAM 22 (S32).

Next, the encryption key data 103 corresponding to the input file name is extracted of the management table 106 (S33) and is copied to the portion 104, from which the encryption key data is extracted, of the encrypted data 105 (S34). With this, the encrypted data 105 is decoded to the original compressed data 102. Then, the compressed data 102 is expanded (S35) and the original image data is output by printing on recording paper 130 by the printing means 24 (S36).

In a case where the user provides the printing instruction through the display operating part 26 of the image forming apparatus 20 in this manner, the user can take out and print the image without inputting the encryption key data 103, so the user can keep ordinary operation without being aware of encryption in the image forming apparatus 20.

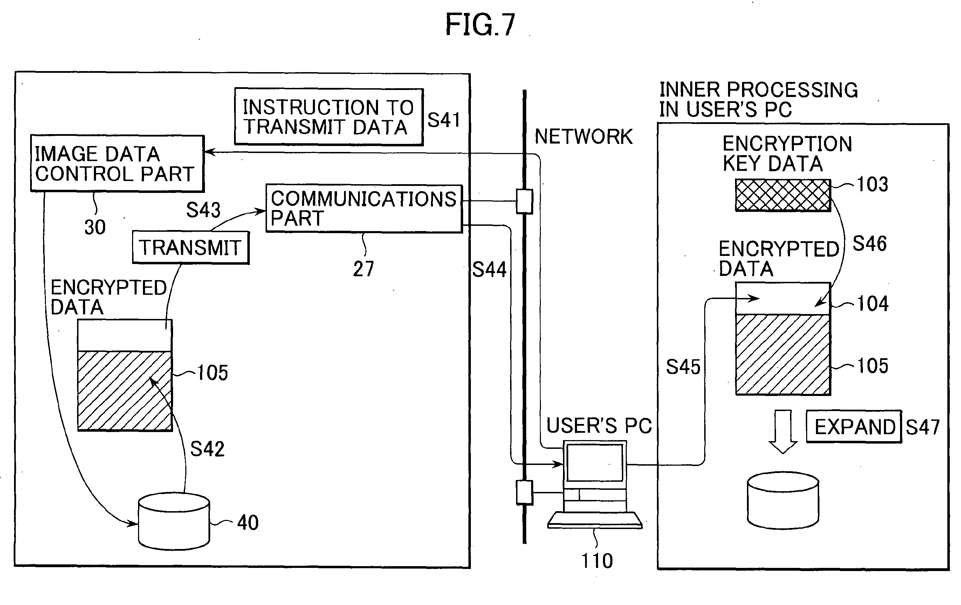

Fig. 7 shows a flow of data in a case where the encrypted data stored in the auxiliary storage unit 40 is extracted through the network to the outside and is decoded and expanded by the user's personal computer 110. The user transmits an instruction of transmitting a stored file from the personal computer 110 through the network to the image forming apparatus 20 (S41). The image data control part (CPU) 30 of the image forming apparatus 20 receiving the instruction of transmission reads the designated file from the auxiliary storage unit 40 and sets the encrypted data 105 stored in the designated file in the predetermined region of RAM 22 (S42). Then, this encrypted data 105 is transferred to the communication part 27 (S43) and is transmitted through the network to the user's personal computer 110 (S44).

The user's personal computer 110 receiving the encrypted data 105 through the network from the image forming apparatus 20 stores this encrypted data 105 in an inner memory (S45). Then, the encryption key data 103 previously received from the image forming apparatus 20 is copied to the portion 104 from which the encryption key data of the encrypted data 105is extracted to decode the encrypted data 105 to the compressed data 102 (S46) and the compressed data 102 is expanded (S47). The user's personal computer 110 can store the expanded image data or the decoded compressed data 102 in itself.

Various persons can extract the data stored in the auxiliary storage unit 40 of the image forming apparatus 20 through the network, but only user previously receiving decoding information corresponding to the data can decode the data to the compressed data 102 and expand the compressed data 102 to the original image data. As a result, even in a case where the image forming apparatus 20 has a function of extracting the stored image through the network from a remote position, the stored image is protected from being illegally viewed by a third party.

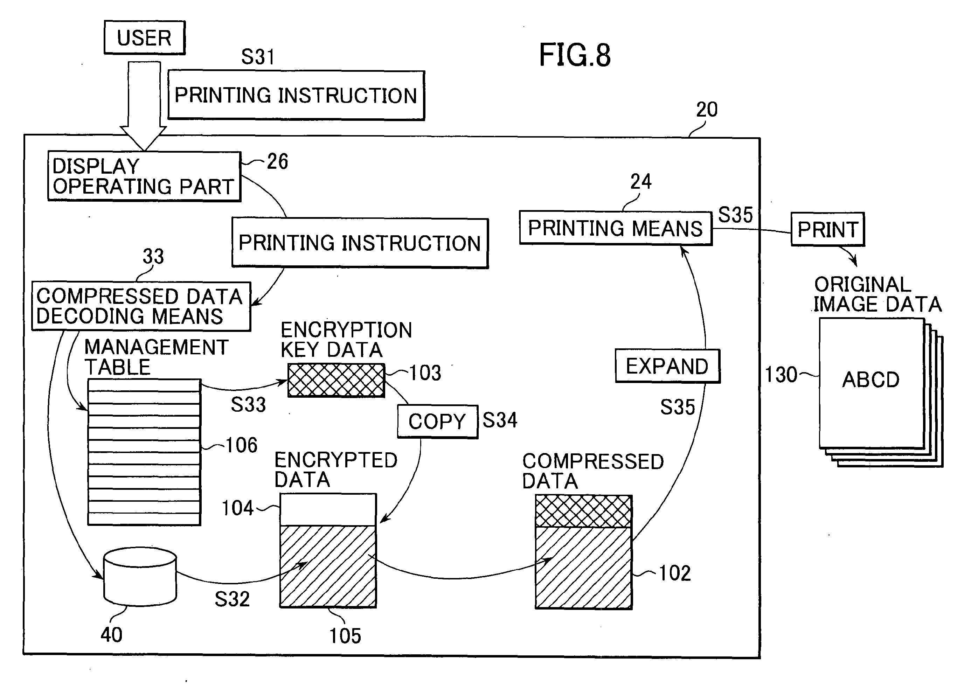

Fig. 8 shows a flow of data in a case where the encrypted data stored in the auxiliary storage unit 40 is decoded and expanded by the use of decoding information output by printing on the recording paper. The user refers to the decoding information printed on the recording paper and inputs an instruction of printing the name of a file to be printed and the encryption key data from the display operating part 26 (S51). The image data control part (CPU) 30 receiving the instruction of printing reads the designated file from the auxiliary storage unit 40 and sets the encrypted data 105 stored in the file in the predetermined region of RAM 22 (S52). Next, the encryption key data 103 input from the display operating part 26 is copied to the portion 104, from which the encryption key data is extracted, of the encrypted data 105 (S53). With this, the encrypted data 105 is decoded to the original compressed data 102. Then, the compressed data 102 is expanded to the original image data (S54) and the original image data is output by printing on the recording paper 130 by the printing means 24 (S55).

In the present embodiment, a case where the portion 11a in Fig. 1 is replaced with data different from the encryption key data by clearing the portion 11a to zero has been described as an example, but it is also recommended that the portion 11a be replaced with data acquired by adding other data to the portion 11a to substantially corrupt the data in the portion 11a.

Next, a second embodiment will be described.

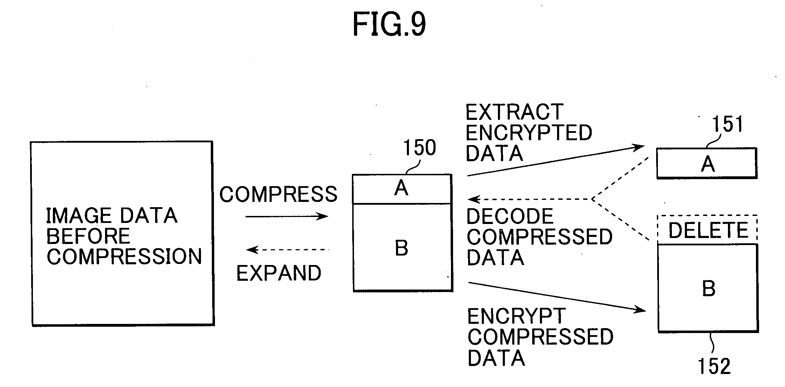

In the first embodiment, the portion from which the encryption key data is extracted of the compressed data is cleared to zero to be corrupted. However, in the second embodiment, the portion from which the encryption key data is extracted is deleted from the compressed data. That is, as shown in Fig. 9, the compressed data 150 is divided into a portion 151 of encryption key data and the other remaining portion 152. The remaining portion 152 becomes encrypted data. The decoding the encrypted data can be performed by combining the portion 151 of encryption key data with the remaining portion 152. If the compressed data is encrypted by deleting the portion from which the encryption key data is extracted, the amount of encrypted data to be stored can be reduced.

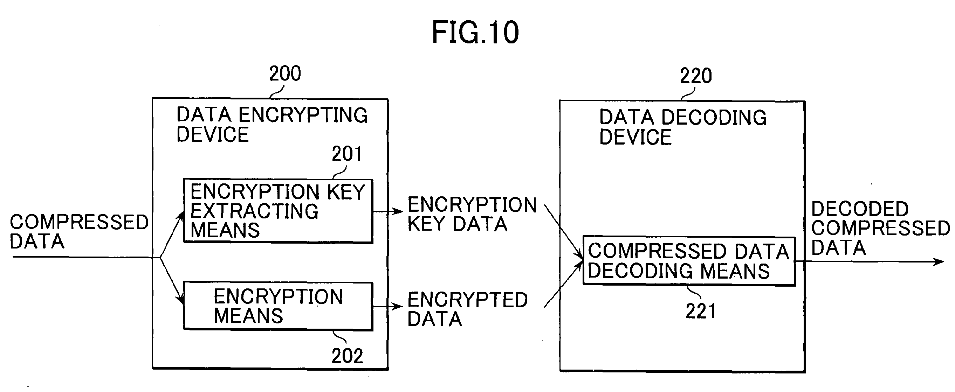

Next, a data encrypting device and a data decoding device as the third embodiment of the present invention will be described. Fig. 10 shows the construction of a data encrypting device 200 and the construction of a data decoding device 220. To the data encrypting device 200 is input the compressed data compressed by a compression scheme by which if even a portion of compressed data is not correct, the compressed data cannot be expanded. Encryption key extracting means 201 extracts and outputs a portion of the compressed data as the encryption key data, as is the case with the encryption key extracting means 31 shown in Fig. 2. Encryption means 202, just as the encryption means 32 in Fig. 2, outputs encrypted data that is encrypted by corrupting a portion, from which the encryption key data is extracted, of the compressed data by clearing the portion to zero.

The data decoding device 220 is provided with compressed data decoding means 221 that has the encryption key data and the encrypted data input and combines these data to decode the combined encrypted data to the original compressed data and outputs the original compressed data. By using the data encrypting device 200 and the data decoding device 220, various compressed data can be easily encrypted and encrypted data can be decoded.

Up to this point, various embodiments of the present invention have been described. Concrete construction is not limited to those shown as examples in the embodiments, but modifications and additions within the spirit and scope of the present invention will be included in the present invention. For example, in the embodiments, the portion from which the encryption key data is extracted of the compressed data is cleared to zero to encrypt the compressed data, but it is only essential that the portion be changed to a value different from the extracted encryption key data, thereby being corrupted. Here, it is desirable that the data is completely corrupted so that the data become completely different from the original encryption key data.

Further, in the embodiments, a predetermined range from the beginning of the compressed data is extracted as encryption key data. However, it is also recommended that the encryption key data be extracted, like worm holes, from a plurality of portions in the compressed data. Moreover, it is also recommended that the portions to be extracted be changed at random and that information indicating the extracting portions be also encrypted separately.

Still further, in the embodiments, the encryption key data is stored in the management table 106 and the encrypted data is stored in the auxiliary unit 40, but these data may be stored in the same storage medium if they are stored in separate storage regions. In this respect, if the encryption key data and the encrypted data are stored in physically separate storage media, even if the auxiliary storage unit 40 or the like to store the encrypted data is stolen and the encrypted data is analyzed, it is impossible to decode the encrypted data and hence to ensure a high level of security.

According to the data encrypting device, the data decoding device, the image data storing device and the image forming apparatus in accordance with the present invention, a portion of compressed data acquired by compression processing is extracted to be the encryption key data and the information of the portion extracted as the encryption key data is corrupted (replaced or has data added thereto) or the region is deleted to encrypt the compressed data. Hence, the compressed data can be encrypted by a simple processing and therefore the data can be encrypted without providing additional special hardware or placing a heavy load on the CPU to improve the level of security.

In particular, in the case of storing the image data, in order to reduce the amount of memory to be used, compression processing is usually performed, so the encrypting of the data by the use of property of the compressed data after compression can reduce additional processings associated with the encryption and hence can effectively perform compression and encryption.

## Claims

1. A data encrypting device comprising:
encryption key extracting means for extracting a portion of compressed data, acquired by compressing data by a compression processing, as encryption key data; and
encryption means for encrypting the compressed data by changing the portion, extracted as the encryption key data, of the compressed data.

2. The data encrypting device according to claim 1, wherein the compression processing is a processing by which if even a portion of compressed data is not correct, the compressed data cannot be expanded.

3. The data encrypting device according to claim 1, wherein the encryption means replaces the portion, extracted as the encryption key data, of the compressed data with data different from the encryption key data.

4. The data encrypting device according to claim 1, wherein the encryption means deletes the portion, extracted as the encryption key data, of the compressed data.

5. The data encrypting device according to claim 1, wherein the encryption means adds other data to the portion, extracted as the encryption key data, of the compressed data.

6. The data encrypting device according to claim 1, wherein a predetermined range of the compressed data from the beginning is made the encryption key data.

7. A data decoding device comprising:
a data encrypting device as defined in any one of claims 1 to 6; and
compressed data decoding means for decoding the combined data to the compressed data before encryption by combining the encryption key data and the compressed data after encryption, both of which are generated from the same compressed data.

8. An image data storing device comprising:
compression means for compressing image data by a compression processing;
a data encrypting device as defined in any one of claims 1 to 6;
encryption key storing means for storing the encryption key data extracted by the encryption key extracting means of the data encrypting device;
encrypted data storing means for storing encrypted data acquired by encrypting the compressed data by the encryption means;
management information storing means for storing management information showing correspondence between the encryption key data and the encrypted data both of which are acquired from the same compressed data;
compressed data decoding means that extracts the encryption key data and the encrypted data, both of which are acquired from the same compressed data, from the encryption key storing means and the encrypted data storing means on the basis of the management information stored in the management information storing means and combines them to decode them to the original compressed data; and
expansion means for expanding the compressed data decoded by the compressed data decoding means to the image data before compression.

9. An image data storing device comprising:
compression means for compressing image data by a compression processing;
a data encrypting device any one of claims 1 to 6;
encrypted data storing means for storing encrypted data acquired by encrypting the compressed data by the encryption means of the data encrypting device; and
decoding information outputting means for outputting the encryption key data extracted by the encryption key extracting means of the data encrypting device and specific information for specifying the encrypted data corresponding to this encryption key data in association with each other in a predetermined form to an external user.

10. The image data storing device according to claim 9, further comprising:
decoding information inputting means for inputting the encryption key data and specific information associated with this;
compressed data decoding means that extracts the encrypted data corresponding to the specific information input through the decoding information inputting means from the encrypted data storing means and combines the encrypted data with the input encryption key data to decode the combined encrypted data to the compressed data before encryption; and
expansion means for expanding the compressed data decoded by the compressed data decoding means to the image data before compression.

11. An image forming apparatus comprising:
reading means for reading an original document to capture image data corresponding thereto;
compression means for compressing the image data by a compression processing;
a data encrypting device any one of claims 1 to 6, wherein the encryption key extracting means is provided for extracting a portion of compressed data, acquired by compressing the image data by the compression means, as encryption key data;
encryption key storing means for storing the encryption key data extracted by the encryption key extracting means;
encrypted data storing means for storing encrypted data acquired by encrypting the compressed data by the encryption means;
management information storing means for storing management information showing correspondence between the encryption key data and the encrypted data both of which are acquired from the same compressed data;
compressed data decoding means that extracts the encryption key data and the encrypted data, both of which are acquired from the same compressed data; from the encryption key storing means and the encrypted data storing means on the basis of the management information stored in the management information storing means and combines them to decode them to the original compressed data;
expansion means for expanding the compressed data decoded by the compressed data decoding means to the image data before compression; and
printing means for forming and outputting an image corresponding to the expanded image data on recording paper.
